# FASCICULE DE BREVET EUROPEEN

(11) **EP 2 407 375 B1**
(45) Date de publication et mention de la délivrance du brevet: **06.01.2016**
(21) Numéro de dépôt: 11171387.1
(22) Date de dépôt: 24.06.2011
(51) Int. Cl.: B64C 1/40, B64C 1/06, H02G 3/32, B64D 11/00

(54) **Dispositif de revêtement intérieur d'une cabine d'aéronef intégrant un tuyau d'air**
Innenverkleidung eines Luftfahrzeugs mit einem Luftführungselement
Interior panel of an aircraft cabin integrating an air duct

(30) Priorité: 13.07.2010 FR 1002940
(43) Date de publication de la demande: 18.01.2012
(73) Titulaire: Airbus Operations, 31060 Toulouse (FR)
(72) Inventeur: Sabadie, Lionel, 31200 Toulouse (FR); Bertandeau, Laurent, 31170 Tournefeuille (FR); Bernabe, Thomas, 31700 Blagnac (FR); Banis, Christian, 31490 Leguevin (FR); Tomasi, Marc, 31100 Toulouse (FR)
(74) Mandataire: Santarelli

(56) Documents cités:
- EP-A1- 1 510 454
- DE-A1-102007 019 538
- DE-A1-102007 049 926
- DE-A1-102008 052 794
- US-A1- 2005 082 431

## Description

La présente invention concerne un dispositif de revêtement intérieur d'une cabine d'aéronef.

La structure du fuselage d'un aéronef est usuellement constituée de cadres s'étendant dans des plans transversaux, de lisses s'étendant sensiblement selon une direction longitudinale de l'aéronef à l'extérieur des cadres, et d'une peau qui recouvre lesdites lisses et est fixée à celles-ci. La peau est également fixée aux cadres, par l'intermédiaire de pièces de liaison connues sous le nom de "clip".

Au niveau de la cabine notamment, les faces intérieures du fuselage sont recouvertes successivement par des matelas isolants, réalisant une isolation thermique et acoustique de la cabine, et par des panneaux de revêtement dont la face intérieure reste visible depuis la cabine et forme donc une face de finition. Entre deux cadres successifs du fuselage, la peau dudit fuselage est recouverte de matelas isolants appelés matelas de peau. Chaque cadre du fuselage est par ailleurs recouvert par un matelas appelé matelas de cadre. Une zone de recouvrement peut être prévue entre des matelas de cadre et de peau consécutifs.

Entre les matelas isolants et les panneaux de revêtement sont agencés des systèmes : équipements, câblages électriques, réseaux hydrauliques et pneumatiques ...

Ces systèmes sont usuellement fixés à la structure du fuselage par des dispositifs de fixation ponctuels traversant les matelas isolants recouvrant ladite structure. Ainsi par exemple, les câblages électriques sont fixés aux cadres du fuselage à l'aide de dispositifs de fixation ponctuels comportant une tige qui traverse le cadre et le (ou les) matelas qui le recouvre, des rondelles de blocage de la tige de part et d'autre du cadre, et une patte dans laquelle vient s'engager un collier à serrage rapide recevant un ou plusieurs câblages. Les tuyaux prévus pour la circulation d'air conditionné sont quant à eux usuellement fixés aux lisses, à l'aide de dispositifs de fixation ponctuels comprenant un collier de serrage porté par un support fixé à une lisse par des vis; ces vis traversent le matelas de peau recouvrant la lisse.

Pour la fixation des systèmes, il est donc nécessaire de réaliser des trous dans la structure du fuselage ainsi que dans les matelas isolants.

Les trous réalisés dans la structure fragilisent celle-ci et obligent donc à prévoir des zones épaissies ou autres renforts structuraux à leur proximité. Ces trous compliquent donc la conception du fuselage.

Les trous réalisés dans les matelas isolants dégradent les performances d'isolation de ces derniers, créant autant de ponts thermiques et acoustiques. Ils réduisent également leur étanchéité à l'eau (or les matelas isolants ont également pour fonction de drainer, jusqu'au fond de barque du fuselage, l'eau de condensation apparaissant sur la peau de ce dernier). En outre, la réalisation de ces trous complique considérablement la fabrication des matelas et grève leurs coûts de revient. En effet, au niveau de chaque trou réalisé dans un matelas comprenant une couche en laine de verre, ladite couche doit être remplacée par un disque en mousse, qui facilite la réalisation du trou et renforce le matelas autour dudit trou afin d'éviter que le matelas ne se déchire.

De surcroît, en cas de modification tardive (alors que l'aéronef est en phase d'assemblage par exemple) de la structure du fuselage ou d'un système, il est nécessaire de réaliser un ou plusieurs trous supplémentaires dans le matelas concerné et/ou dans l'élément de structure concerné.

La réalisation d'un trou supplémentaire dans un matelas est un procédé particulièrement long et fastidieux. A cette fin, il convient en effet de coller une bande adhésive sur chaque face du matelas à l'emplacement du trou, découper un disque dans le matelas à l'emplacement du trou à l'aide d'un premier outil coupant spécifique, retirer le disque de matelas ainsi découpé et le remplacer par un disque de mousse, coller à nouveau une bande adhésive sur chaque face du matelas de façon à recouvrir et maintenir le disque de mousse, percer le matelas au centre du disque de mousse à l'aide d'un deuxième outil coupant spécifique de façon à former le trou. Lorsqu'un trou supplémentaire est réalisé dans un matelas, il est en outre nécessaire de reboucher le trou désormais inutilisé du matelas.

La réalisation tardive de trous dans un élément de structure pose également problème. Ces trous affaiblissent la structure et, parce qu'ils ne sont pas prévus lors de la conception du fuselage, obligent très souvent à ajouter des renforts structuraux. De surcroît, lorsque la structure est en un matériau composite, la réalisation d'un trou requiert l'utilisation d'un outil spécifique, génère des copeaux nocifs -et donc dangereux pour l'opérateur chargé de réaliser le trou-, et peut provoquer des délaminations du matériau composite autour du trou. Ces problèmes sont plus difficiles à maîtriser lorsque la réalisation du trou n'est pas prévue d'origine et ne s'effectue pas au poste de fabrication de la structure.

Le document EP 1510454, qui est considéré l'état de la technique plus proche, montre un dispositif de revêtement connu.

Pour toutes les raisons précédemment évoquées, il est souhaitable de limiter le nombre de trous réalisés dans la structure et dans les matelas pour la fixation des systèmes.

L'invention a pour objectif de réduire le nombre de trous à réaliser, aux fins de fixation des systèmes, dans la structure du fuselage d'un aéronef et dans les matelas isolants qui recouvrent cette structure. L'invention permet également d'éviter d'avoir à réaliser des trous supplémentaires dans la structure du fuselage ou dans les matelas isolants en cas de modification tardive de cette structure ou de certains systèmes.

Pour ce faire, l'invention propose un dispositif de revêtement intérieur d'une cabine d'aéronef, destiné à être fixé à une structure d'un aéronef et à s'étendre le long d'une peau de l'aéronef par exemple entre un plafond et un plancher de l'aéronef, ledit dispositif comprenant un panneau de revêtement. Le dispositif de revêtement intérieur selon l'invention est caractérisé en ce que le panneau de revêtement porte au moins un système.

Ainsi, la présente invention propose de venir fixer les systèmes, ou au moins certains d'entre eux, sur un panneau de revêtement porté par la structure et non plus directement sur la structure. De ce fait, la fixation des systèmes portés par le panneau de revêtement ne vient pas impacter la structure de l'aéronef. Il n'est pas nécessaire de prévoir des modifications ni dans la structure de l'aéronef, ni dans les matelas isolants, pour la fixation et le maintien de ces systèmes. L'invention permet donc de supprimer les trous antérieurement réalisés dans les lisses et dans les matelas isolants pour la fixation des systèmes.

Selon une première forme de réalisation, un dispositif selon la présente invention comporte au moins un support pour recevoir un système.

La présente invention est particulièrement avantageuse pour le montage des tuyaux d'air qui sont des systèmes volumineux et donc plus difficiles à loger et à fixer sur la structure de l'aéronef. La présente invention propose alors un dispositif de revêtement qui comprend au moins un tuyau de circulation d'air, dit tuyau d'air, fixé à une face extérieure du panneau de revêtement, chaque tuyau d'air présentant une extrémité, dite extrémité amont, munie d'un dispositif de raccordement.

Ainsi, l'invention fournit alors un dispositif de revêtement intérieur qui intègre à la fois un panneau de revêtement et un ou plusieurs tuyaux d'air fixés audit panneau. Comme mentionné précédemment, les tuyaux d'air ne sont plus fixés à la structure du fuselage mais sont portés par les panneaux de revêtement qui habillent la cabine.

L'invention propose également un procédé d'installation d'un panneau de revêtement et d'au moins un tuyau de circulation d'air (dit tuyau d'air) entre deux cadres d'un aéronef, caractérisé en ce que :
- on utilise un dispositif de revêtement intérieur tel que précédemment défini, intégrant à la fois un panneau de revêtement et au moins un système tel un tuyau d'air et/ou un câble électrique,
- on positionne ledit dispositif de revêtement intérieur entre deux cadres de l'aéronef et on fixe ledit dispositif auxdits cadres,
- on raccorde l'extrémité amont de chaque système à un système d'alimentation de l'aéronef.

Dans l'art antérieur, l'installation d'un ou plusieurs systèmes et d'un panneau de revêtement entre deux cadres d'un aéronef s'effectue en deux temps : un premier temps pour la fixation des systèmes à la structure de l'aéronef, et un deuxième temps pour la fixation du panneau de revêtement aux cadres. En outre, la fixation des systèmes, notamment des tuyaux d'air sur les lisses selon l'art antérieur est une opération délicate nécessitant l'intervention d'un opérateur qualifié : l'opérateur doit repérer à tâtons la lisse (recouverte par un matelas de peau) sur laquelle il doit fixer le tuyau d'air, puis il doit réaliser avec le plus grand soin des perçages à travers le matelas de peau et ladite lisse pour l'ancrage du dispositif de fixation permettant d'attacher le tuyau. A l'inverse, dans le procédé selon l'invention, la fixation des systèmes sur le panneau de revêtement lors de la fabrication du dispositif de revêtement intérieur est une opération simple et rapide, qui ne soulève aucun problème technique particulier et peut s'effectuer de façon standardisée et éventuellement automatisée, en amont du poste auquel les panneaux de revêtement sont installés dans l'aéronef. L'invention se traduit donc également par un gain de productivité significatif.

De préférence, un dispositif de revêtement intérieur selon l'invention est adapté pour recouvrir une zone de fuselage délimitée par trois cadres consécutifs. En d'autres termes, l'invention concerne un procédé d'installation d'un panneau de revêtement et d'au moins un système entre deux cadres qui ne sont pas nécessairement consécutifs. Lorsqu'il est adapté pour s'étendre devant plusieurs tranches de fuselage (chaque tranche étant délimitée par deux cadres consécutifs), le dispositif selon l'invention intègre avantageusement un tuyau d'air par tranche de fuselage.

Avantageusement, chaque tuyau d'air présente une autre extrémité, dite extrémité aval, s'ouvrant sur une bouche de sortie d'air traversant le panneau de revêtement. De préférence, chaque bouche de sortie d'air est ménagée en partie supérieure du panneau de revêtement, et l'extrémité aval est donc une extrémité supérieure du tuyau d'air.

Dans une forme de réalisation possible de l'invention, cette bouche de sortie d'air est intégrée au panneau de revêtement; elle forme l'extrémité aval du tuyau d'air, cette extrémité étant de préférence évasée.

Dans une autre forme de réalisation possible de l'invention, chaque bouche de sortie d'air est formée par une buse, et l'extrémité aval de chaque tuyau d'air est raccordée à la buse correspondante par un dispositif de raccordement comprenant de préférence un manchon en élastomère serré autour du tuyau d'air et de la buse respectivement par deux colliers de serrage.

Avantageusement, l'extrémité amont de chaque tuyau d'air s'étend en saillie d'un bord inférieur du panneau de revêtement. Cette extrémité amont est destinée à être raccordée à un conduit d'alimentation en air conditionné, de préférence agencé en dessous d'un plancher de l'aéronef.

De préférence, chaque tuyau d'air est fixé à la face extérieure du panneau de revêtement en au moins deux points de fixation, de préférence en au moins trois points de fixation, de manière encore préférée en trois points seulement.

Avantageusement, chaque tuyau d'air est pourvu d'une patte de fixation qui s'engage dans un support, dit support de verrouillage axial, fixé à la face extérieure du panneau de revêtement, ladite patte de fixation et ledit support de verrouillage axial étant adaptés pour coopérer de façon à interdire tout déplacement du tuyau d'air selon une direction axiale dudit tuyau relativement au panneau de revêtement. En conséquence, la patte de fixation et le support de verrouillage axial empêchent tout déplacement du tuyau d'air dans un plan qui est sensiblement vertical lorsque le dispositif de revêtement intérieur est installé dans un aéronef, le tuyau d'air s'étendant alors dans un tel plan sur une majorité de sa longueur.

Ladite patte de fixation et ledit support de verrouillage axial définissent avantageusement un point de fixation supérieur.

Dans une forme de réalisation possible, la patte de fixation présente une section en forme de C dans un plan transversal du tuyau d'air et comprend une âme présentant deux excroissances latérales opposées s'étendant selon la direction axiale dudit tuyau. Par ailleurs, le support de verrouillage axial comprend deux rainures latérales en regard recevant lesdites excroissances.

Avantageusement, pour chaque tuyau d'air, au moins un autre support, dit support de maintien latéral, est fixé à la face extérieure du panneau de revêtement, chaque support de maintien latéral comprenant une face semi-circulaire de réception d'un tuyau d'air et un collier de serrage entourant ledit tuyau d'air. Ce ou ces supports assurent un maintien du tuyau d'air selon une direction transversale du tuyau, laquelle direction est de préférence sensiblement horizontale lorsque le dispositif de revêtement intérieur est installé dans un aéronef.

De préférence, deux supports de maintien latéral, définissant respectivement un point de fixation central et un point de fixation inférieur, sont prévus pour chaque tuyau d'air.

Une variante de réalisation de la présente invention prévoit que le dispositif selon l'invention comprend au moins un tuyau de circulation d'air, dit tuyau d'air, fixé à une face extérieure du panneau de revêtement de manière à ne former qu'une seule pièce avec ledit panneau de revêtement. Il peut par exemple s'agir d'une pièce en matière synthétique moulée.

Dans la présente invention, il est également prévu que le panneau de revêtement porte éventuellement au moins un support de câbles et au moins un câble électrique monté dans lesdits supports. Ces câbles électriques peuvent être montés en plus du (ou des) tuyaux d'air ou en remplacement de ceux-ci. La présente invention s'étend à un aéronef comprenant des dispositifs de revêtement intérieur selon l'invention. Un tel aéronef comporte par exemple de manière classique des cadres et une peau ; des matelas de peau recouvrent la peau entre deux cadres; des matelas de cadre recouvrent les cadres. Dans un tel aéronef, on peut avantageusement prévoir que le dispositif de revêtement tel que décrit ci-dessus comporte des moyens de fixation permettant la fixation dudit dispositif sur des supports de fixation fixés chacun sur un cadre et maintenant, au moins localement, le matelas de cadre correspondant sur ledit cadre. Cette forme de réalisation est avantageuse car les supports de fixation sont alors aussi utilisés pour le maintien des matelas de cadre.

La présente invention s'étend aussi à un dispositif de revêtement intérieur défini en combinaison par tout ou partie des caractéristiques décrites ci-avant et ci-après.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- la figure 1 est une vue schématique en perspective d'une portion du fuselage d'un aéronef, une partie de la peau de ce fuselage étant réalisée transparente de façon à laisser apparaître un dispositif de revêtement intérieur selon l'invention,
- la figure 2 est une vue en perspective du dispositif de revêtement intérieur visible sur la figure 1, ledit dispositif étant vu depuis une face extérieure de son panneau de revêtement,
- la figure 3 est une vue en perspective d'une partie du dispositif de revêtement intérieur illustré sur la figure 2,
- les figures 4a et 4b sont des vues en perspective d'un support de verrouillage axial,
- la figure 5 est une vue en perspective d'une partie du dispositif de revêtement intérieur illustré sur la figure 2, dans laquelle le tuyau d'air est détaché du panneau de revêtement,
- la figure 6 est une vue en perspective d'un support de verrouillage latéral,
- la figure 7 est une vue en perspective du dispositif de revêtement intérieur illustré sur la figure 2, ledit dispositif étant vu depuis une face intérieure de son panneau de revêtement,
- la figure 8 est une vue en perspective d'un support de fixation permettant de fixer un dispositif de revêtement intérieur selon l'invention à un cadre de l'aéronef, ledit support de fixation étant vu depuis un premier côté dudit cadre,
- la figure 9 est une vue en perspective du support de fixation illustré sur la figure 8, ledit support de fixation étant vu depuis le second côté du cadre,
- la figure 10 est une vue en perspective d'un support double de câbles avant son montage sur un revêtement intérieur,
- la figure 11 montre le support double de câbles de la figure 10 en position montée et supportant deux câbles,
- la figure 12 est une vue en perspective d'une variante de réalisation d'un dispositif de revêtement intérieur,
- la figure 13 montre en perspective un détail du revêtement de la figure 12,
- la figure 14 montre en perspective un support de fixation destiné à coopérer avec des moyens complémentaires présentés sur la figure 13,
- la figure 15 montre en perspective un détail du revêtement de la figure 14,
- la figure 16 montre en perspective un support de fixation destiné à coopérer avec des moyens complémentaires présentés sur la figure 15, et
- la figure 17 montre une variante de réalisation d'un dispositif de revêtement selon la présente.

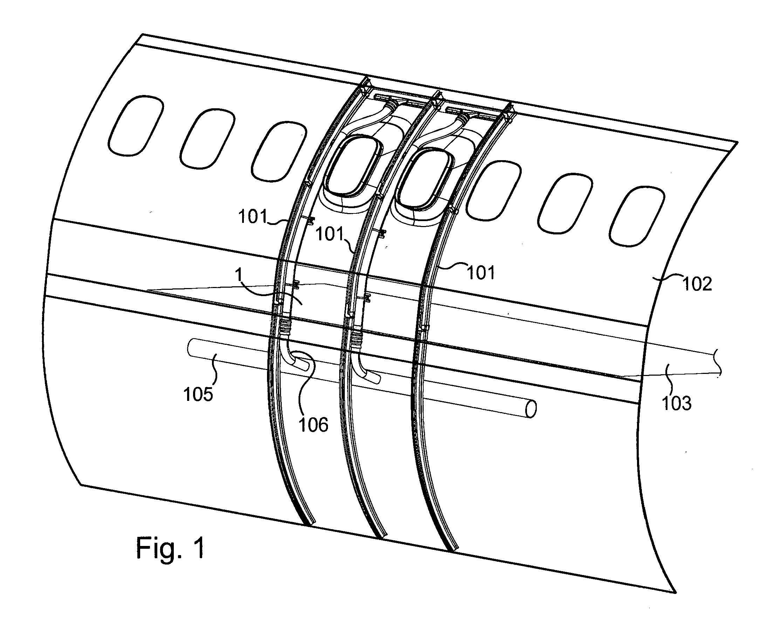

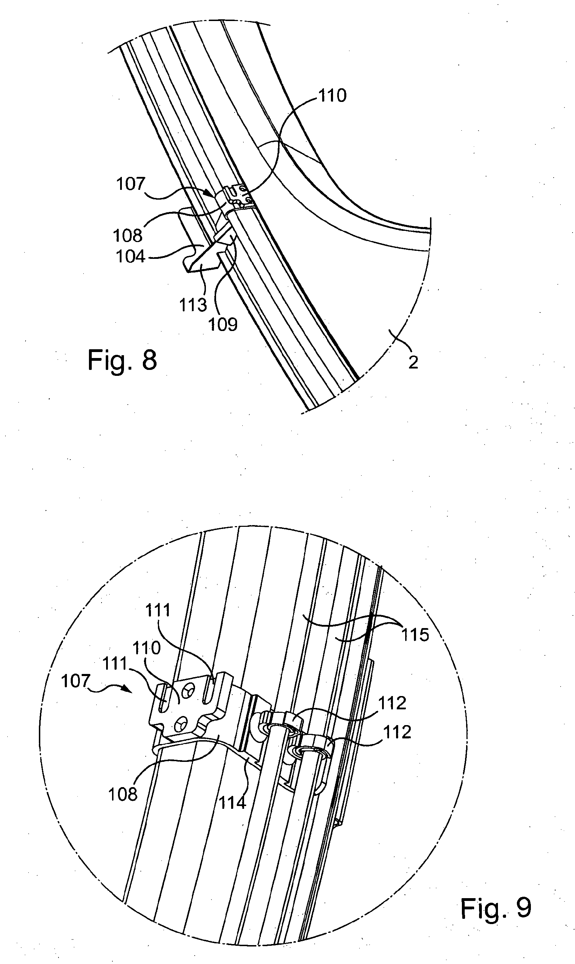

On peut observer sur la figure 1 une portion d'un fuselage d'un aéronef, vue depuis l'extérieur de l'aéronef. Un tel fuselage comprend des cadres 101 s'étendant transversalement, des lisses (non représentées) s'étendant selon la direction longitudinale du fuselage à l'extérieur des cadres 101, une peau 102 formée à l'extérieur des lisses et directement fixée à ces dernières, et un plancher 103. La peau 102 est également fixée aux cadres 101 par des pièces de liaison 104 visibles sur la figure 8, connues sous le nom de clips. Sur la figure 1, on aperçoit notamment, par transparence à travers la peau 102, trois cadres 101 délimitant deux tranches de fuselage.

La cabine de l'aéronef est délimitée par une portion de fuselage s'étendant entre le plancher 103 et un plafond (non représenté). Cette portion de fuselage est recouverte (à l'intérieur) successivement par des matelas isolants (non représentés sur la figure 1) et des dispositifs de revêtement intérieur 1 selon l'invention.

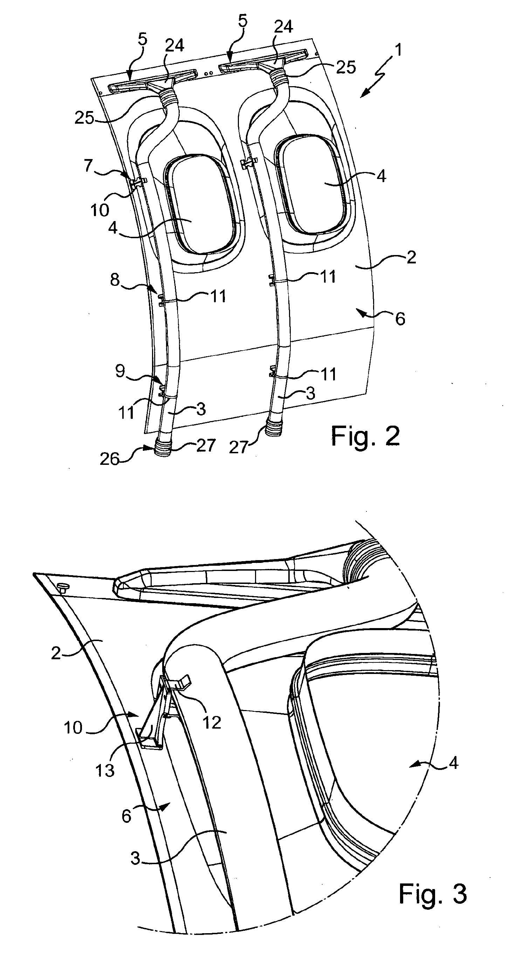

Le dispositif de revêtement intérieur 1 illustré aux figures 1 et 2 comprend un panneau de revêtement 2 rigide et deux tuyaux d'air 3 portés par le panneau de revêtement 2. Chaque tuyau d'air 3 est fixé à une face extérieure 6 du panneau de revêtement 2. Les termes "face extérieure" désignent ici la face convexe du panneau, qui, lorsque le dispositif est installé dans un aéronef, est orientée vers l'extérieur de l'aéronef et s'étend en regard de la peau 102 de ce dernier.

En l'exemple illustré, le panneau de revêtement 2 est destiné à s'étendre entre le plancher 103 et le plafond de la cabine et à recouvrir deux tranches de fuselage (une tranche étant délimitée par deux cadres 101 consécutifs). Il comprend donc deux ouvertures 4 destinées à recevoir deux hublots, ainsi que deux lumières 5 oblongues de sortie d'air conditionné en partie supérieure du panneau de revêtement. Ces lumières 5 s'étendent sensiblement selon la direction longitudinale de l'aéronef lorsque le dispositif selon l'invention est installé dans un aéronef.

Chaque lumière 5 délimite, avec une buse 24 s'évasant en direction de la face extérieure 6 du panneau de revêtement, une bouche de sortie d'air permettant de délivrer de l'air conditionné dans la cabine de l'aéronef. L'extrémité supérieure, dite extrémité aval, de chacun des deux tuyaux d'air 3 est connectée à l'une des deux buses 24 à l'aide d'un dispositif de raccordement 25 du type connu sous le nom de raccord rapide. Un tel raccord rapide 25 comprend par exemple un manchon et un joint torique en élastomère, lequel joint torique est inséré dans une gorge interne du manchon ménagée dans un plan médian de ce dernier. Le joint torique autorise un léger défaut d'alignement des extrémités du tuyau d'air et de la buse. Le manchon est initialement emboîté autour de l'extrémité inférieure de la buse 24. Un épaulement interne ménagé à proximité du bord supérieur du manchon vient alors s'insérer dans une rainure externe complémentaire ménagée dans la buse afin de bloquer le manchon. Dans cette position de blocage, le joint torique porté par le manchon est plaqué contre l'extrémité de la buse. L'extrémité aval du tuyau d'air 3 est ensuite insérée dans le manchon. Le raccord rapide 25 comprend de plus deux colliers de serrage, l'un serrant le manchon autour de l'extrémité de la buse, l'autre serrant le manchon autour de l'extrémité du tuyau d'air.

Chaque tuyau d'air 3 est fixé à la face extérieure 6 du panneau en trois points de fixation 7, 8, 9.

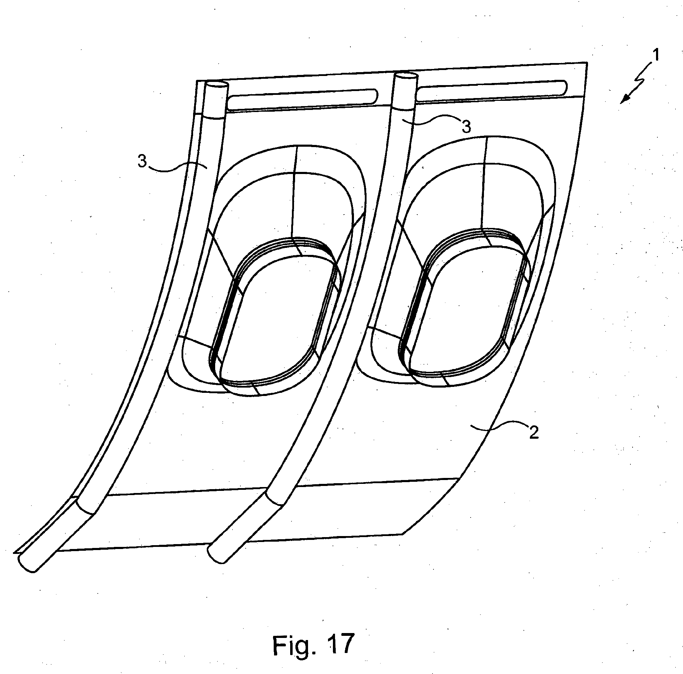

Dans la variante de réalisation de la figure 17, les mêmes références sont utilisées pour des éléments similaires. On retrouve sur cette figure un dispositif de revêtement comportant un panneau de revêtement 2 rigide et deux tuyaux d'air 3 portés par le panneau de revêtement 2. L'originalité de la forme de réalisation réside ici dans le fait que les tuyaux d'air 3 ne forment qu'une seule pièce avec le panneau de revêtement 2. Il peut s'agir ici d'une pièce réalisée par moulage d'une matière synthétique.

Le dispositif montré sur la figure 17 peut également recevoir des autres systèmes, par exemple des câbles électriques, comme il est expliqué plus loin dans la présente description.

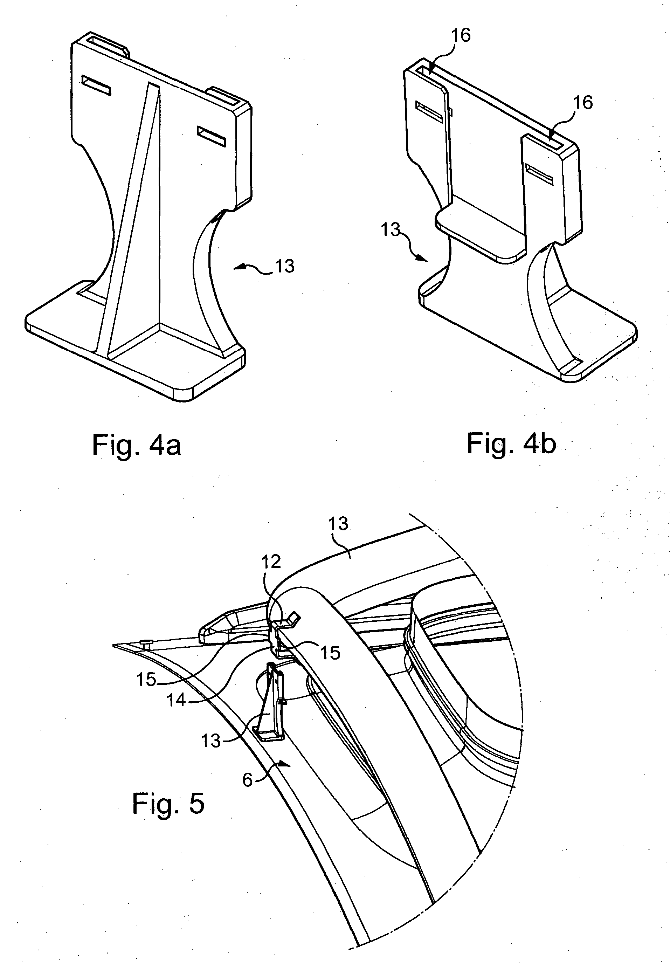

Les figures 3, 4a, 4b et 5 illustrent les moyens de fixation 10 prévus au point de fixation supérieur 7. Ces moyens de fixation 10 comprennent :
- une patte de fixation 12, fixée au tuyau d'air 3 ; cette patte de fixation présente une section globalement en forme de C dans un plan orthogonal à une direction axiale du tuyau d'air 3, les extrémités des branches du C étant prolongées par deux rebords permettant le collage de la patte de fixation 12 au tuyau d'air 3 ; l'âme 14 du C présente deux excroissances 15 latérales opposées, qui s'étendent sensiblement selon la direction axiale du tuyau d'air;
- un support 13, dit support de verrouillage axial, fixé, par exemple par collage, à la face extérieure 6 du panneau de revêtement 2 ; ce support de verrouillage axial 13 comprend deux rainures 16 latérales en regard l'une de l'autre selon la direction axiale du tuyau d'air 3; ces rainures 16, qui forment une glissière, reçoivent les excroissances 15 de la patte de fixation 12.

Lorsque la patte de fixation 12 est emboîtée dans le support de verrouillage axial 13, le tuyau d'air est bloqué selon sa direction axiale relativement au panneau de revêtement 2. L'invention s'étend à tout autre moyen de fixation permettant de solidariser le tuyau d'air 3 au panneau de revêtement 2 et d'interdire tout déplacement dudit tuyau selon sa direction axiale: autre forme de liaison glissière, par exemple à queue d'aronde, entre une patte collée au tuyau et un support collé au panneau de revêtement, liaison tenon-mortaise entre une telle patte et un tel support, etc.

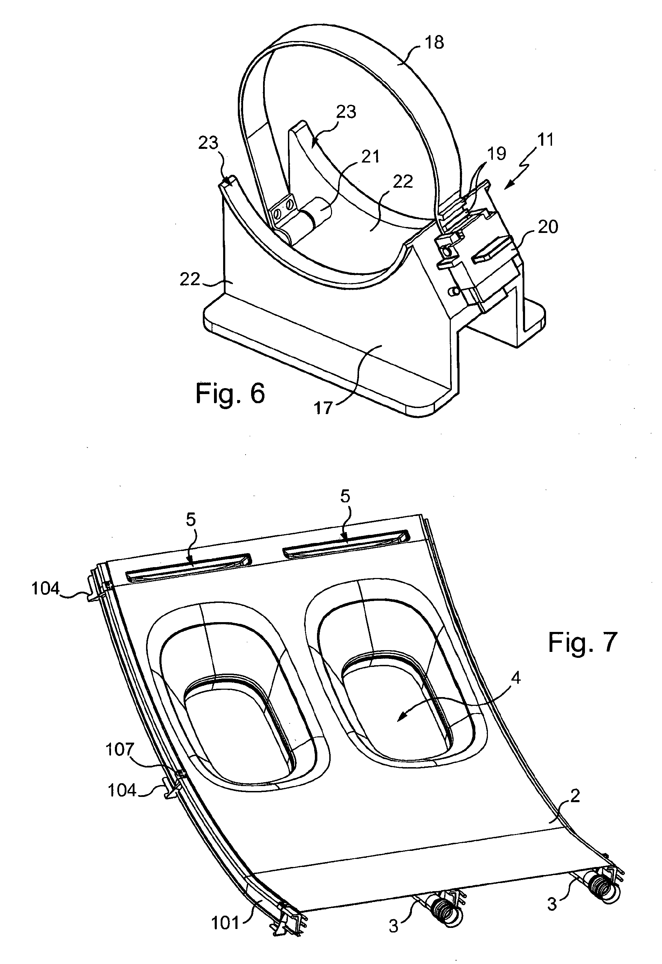

La figure 6 illustre les moyens de fixation 11, dits support de maintien latéral, prévus au point de fixation central 8 et au point de fixation inférieur 9. Ce support de maintien latéral 11 comprend un socle 17 et un collier 18. Le socle 17 est fixé, par exemple par collage, à la face extérieure 6 du panneau de revêtement 2. Ce socle 17 présente deux chapes 22, dont les chants 23 opposés à la face extérieure 6 forment une surface cylindrique de section semi-circulaire recevant le tuyau d'air 3. Un pivot 21, s'étendant entre les deux chapes 22 d'un côté du socle 17, permet de solidariser une extrémité du collier 18 au socle 17. L'autre extrémité du collier 18, pourvue d'une succession de nervures 19, est engagée dans un boîtier 20 agencé de l'autre côté du socle. La face supérieure dudit boîtier peut coulisser entre une position de déverrouillage, dans laquelle l'extrémité du collier peut être déplacée à l'intérieur du boîtier 20, et une position de verrouillage, dans laquelle l'extrémité du collier est pincée. Le collier est ainsi bloqué après avoir été serré autour du tuyau d'air 3. Un tel support de maintien latéral 11 interdit tout mouvement du tuyau d'air 3 relativement au panneau de revêtement 2 selon toute direction, dite direction transversale, orthogonale à la direction axiale du tuyau. L'invention s'étend à tout autre moyen de fixation permettant de solidariser le tuyau d'air 3 au panneau de revêtement 2 et d'interdire tout déplacement dudit tuyau selon des directions transversales.

L'invention n'est en aucun cas limitée à la manière dont le tuyau d'air 3 est fixé au panneau de revêtement 2. Des points de fixation rigide peuvent également, en variante, être prévus.

L'extrémité inférieure 26, dite extrémité amont, de chaque tuyau d'air 3 est munie d'un dispositif de raccordement 27 du type raccord rapide. A l'instar du raccord rapide 25 décrit précédemment, ce raccord rapide 27 comprend un manchon, un joint torique et deux colliers de serrage. Le manchon est initialement porté par l'extrémité amont 26 du tuyau d'air 3. Cette extrémité amont est destinée à être raccordée à un conduit 106 d'alimentation en air conditionné, dérivé d'un circuit d'alimentation 105 agencé sous le plancher 103 de l'aéronef (voir figure 1). De préférence, l'extrémité du conduit 106 qui fait face à l'extrémité amont du tuyau d'air 3 est pourvue d'un embout conique permettant de corriger un éventuel défaut d'alignement du conduit 106 et du tuyau d'air 3. Cet embout conique vient s'emboîter dans le manchon porté par l'extrémité amont 26 du tuyau d'air 3. Les deux colliers de serrage permettent de maintenir fermement le manchon autour, respectivement, de l'extrémité amont 26 du tuyau d'air et de l'embout conique du conduit 106 d'alimentation en air conditionné.

Il est également proposé ici un procédé d'installation dans un aéronef d'un panneau de revêtement et d'un ou plusieurs tuyaux d'air. Préalablement à ce procédé, on fabrique un dispositif de revêtement intérieur 1 tel celui illustré à la figure 2, destiné par exemple à recouvrir deux tranches de fuselage. À cette fin, on fixe les deux tuyaux d'air 3 à la face extérieure 6 du panneau de revêtement 2, à l'aide des moyens de fixation 10 et 11, et on raccorde l'extrémité aval de chaque tuyau d'air 3 à la buse 24 correspondante.

Pour installer le dispositif de revêtement intérieur 1 dans l'aéronef (voir notamment figure 7) :
- on agence une pluralité de supports de fixation 107 sur au moins deux cadres 101 destinés à recevoir le dispositif de revêtement intérieur 1. En l'exemple illustré, le dispositif de revêtement intérieur 1 est dimensionné de façon à recouvrir deux tranches de fuselage; il est donc destiné à s'étendre en regard de trois cadres, recouvrant partiellement deux desdits cadres, dit cadres d'extrémité, et recouvrant totalement le troisième, dit cadre intermédiaire; de préférence, on agence trois supports de fixation 107 sur chacun des trois cadres; il est cependant possible de prévoir davantage de supports de fixation ou de n'en prévoir que deux par cadre; il est également possible de n'équiper de supports de fixation que deux des trois cadres, par exemple les cadres d'extrémité;
- on positionne le dispositif de revêtement intérieur 1 en regard des deux tranches de fuselage que le dispositif doit recouvrir, c'est-à-dire en regard des cadres 101 destinés à le recevoir, autrement dit entre les deux cadres d'extrémité;
- on fixe le dispositif de revêtement intérieur 1 aux supports de fixation 107 agencés sur les cadres 101 ; le dispositif de revêtement intérieur 1 est ainsi fixé auxdits cadres par l'intermédiaire des supports de fixation 107 ;
- on raccorde l'extrémité amont 26 de chaque tuyau d'air 3 au conduit 106 d'alimentation en air conditionné correspondant, à l'aide du raccord rapide 27 préalablement monté sur ladite extrémité amont 26.

Les supports de fixation 107 utilisés pour fixer le dispositif de revêtement intérieur 1 peuvent être du type de celui illustré sur les figures 8 et 9. Un tel support de fixation 107 comprend avantageusement une première portion formant une pince 108 adaptée pour venir coiffer et pincer un cadre 101 recouvert d'un matelas de cadre. Cette pince 108 comprend notamment deux branches opposées s'étendant de part et d'autre du cadre, lesquelles branches sont plaquées contre l'âme dudit cadre (recouverte du matelas de cadre) grâce à l'élasticité de la pince. Le support de fixation 107 comprend de plus une deuxième portion formant une fourche de positionnement 109 adaptée pour venir chevaucher une nervure 113 de renfort d'un clip 104, laquelle nervure 113 est connue sous le nom de stabilisateur. Ladite fourche de positionnement s'étend à partir de l'une, première, des branches de la pince 108. Cette fourche de positionnement 109 permet de positionner et de maintenir le support de fixation 107 relativement au cadre 101 selon la direction longitudinale de ce dernier. Le support de fixation 107 comprend de plus une platine 110 contre laquelle vient se plaquer la face extérieure 6 du panneau de revêtement 2 du dispositif de revêtement intérieur 1 selon l'invention. Cette platine 110 présente deux rainures 111, dans lesquelles viennent s'emboîter et se coincer des ergots (non visibles sur les figures annexées) formés ou fixés sur la face extérieure 6 du panneau de revêtement 2.

Chaque support de fixation 107 comprend de plus avantageusement un ou plusieurs supports de réception de câblage(s) ou autres systèmes. Ces supports sont portés par la seconde branche 114 de la pince 108. En l'exemple illustré, deux supports 112 de câble, aptes à recevoir chacun un câble 115, sont prévus. Chacun de ces supports 112 de câble comprend une cheville (non visible) encastrée dans un trou ménagé dans la seconde branche 114, laquelle cheville permet ainsi l'ancrage du support 112 de câble dans le support de fixation 107. Chaque support 112 de câble comprend par ailleurs un collier articulé, qui présente la forme d'un C en position ouverte et vient enserrer un câble 115 en position fermée.

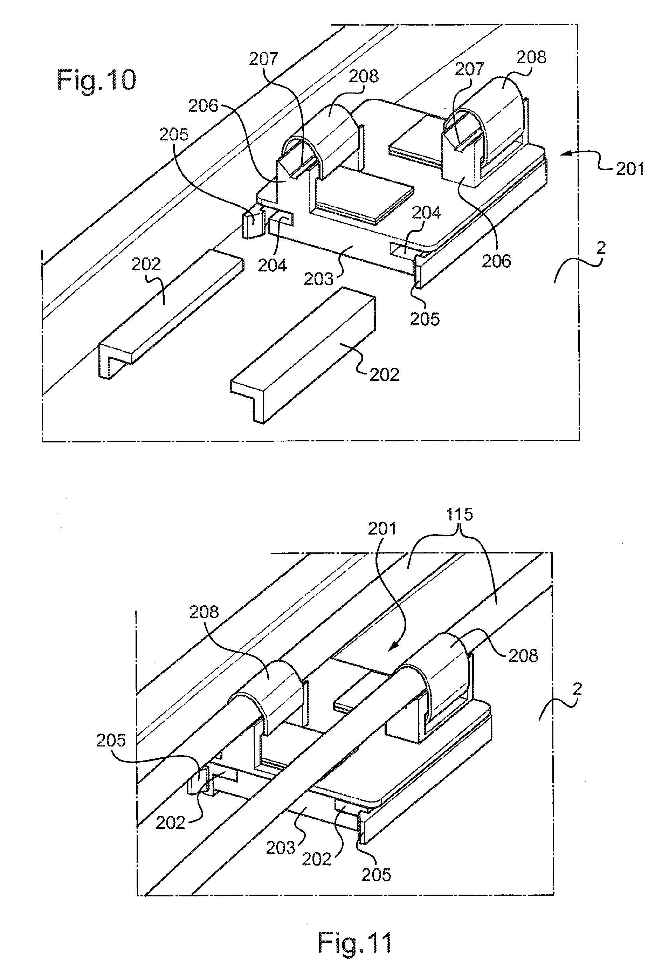

Les figures 10 à 16 montrent une variante de réalisation de la présente invention. Dans cette variante, les éléments similaires à ceux représentés sur les figures 1 à 9 reprennent les mêmes références.

Dans cette nouvelle forme de réalisation, un panneau de revêtement 2 porte, outre des tuyaux d'air 3, également des câbles 115 électriques.

Les figures 10 et 11 illustrent des moyens permettant la fixation de câbles 115 électriques sur le panneau de revêtement 2. Ces moyens comportent des éléments associés au panneau de revêtement 2 et un support de câbles 201. Le panneau de revêtement 2 porte deux rails profilés 202 montés parallèlement l'un face à l'autre. Chaque rail présente une section en L et les deux rails profilés 202 sont tournés l'un vers l'autre.

Le support de câbles 201 présente une plaque de base 203 dans laquelle sont réalisées deux rainures 204. Chaque rainure est de forme adaptée de manière à ce qu'un rail profilé 202 puisse coulisser à l'intérieur de ladite rainure. En outre, les deux rainures 204 sont agencées de telle sorte que lorsqu'un rail profilé 202 coulisse dans une rainure 204 l'autre rail profilé 202 coulisse dans l'autre rainure 204. Les rainures 204 présentent chacune une longueur correspondant à la longueur des rails profilés 202. Une extrémité de chaque rainure 204 est non débouchante de manière à créer une butée pour le rail profilé 202 correspondant en fond de rainure. Les deux rainures 204 débouchent sur un même bord de la plaque de base 203. À l'extrémité débouchante de chaque rainure 204, se trouve un doigt de verrouillage élastique 205 qui permet un verrouillage de la plaque de base 203 par rapport au rail profilé 202 (comme illustré sur la figure 11).

La plaque de base 203 présente deux faces principales, une face dite inférieure dans laquelle débouche chaque rainure 204 et une face, opposée à la face inférieure, appelée face supérieure, et destinée à recevoir les câbles 115 électriques. Cette face supérieure porte deux plots 206. Chaque plot 206 présente une forme globalement parallélépipédique dans la face supérieure duquel est réalisée une rigole 207 en V permettant le positionnement d'un câble 115 électrique. Les deux rigoles 207 sont, comme représenté sur les figures 10 et 11, parallèles.

Enfin, une attache 208 flexible est prévue pour maintenir un câble 115 électrique positionné dans une rigole 207. Une fente réalisée dans le plot 206 permet le passage de l'attache 208 flexible correspondante.

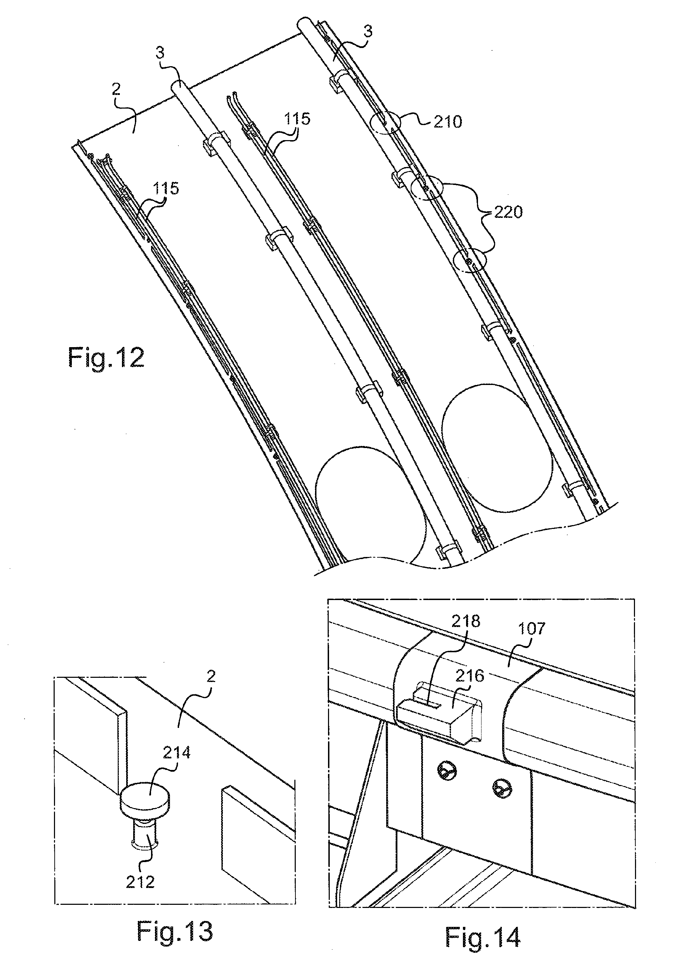

La figure 12 montre un panneau de revêtement sur lequel sont fixés d'une part des tuyaux d'air 3 et d'autre part des câbles 115 électriques. Dans cette forme de réalisation, les tuyaux d'air 3 s'étendent sur toute la longueur du panneau de revêtement 2 et sont fixés sur celui-ci à l'aide des moyens de fixation 11 montrés sur la figure 6. Les câbles 115 électriques s'étendent eux aussi sur toute la longueur du panneau de revêtement 2, d'une extrémité à l'autre de celui-ci, et sont fixés sur ce panneau de revêtement 2 à l'aide des moyens de fixation montrés sur les figures 10 et 11.

Les figures 13 à 16 montrent deux variantes de réalisation permettant la fixation du panneau de revêtement 2 sur des cadres 101.

Les figures 13 et 14 illustrent des moyens de fixation utilisés par exemple pour le point de fixation 210 (figure 12). Les moyens de fixation utilisés ici comportent d'une part sur le panneau de revêtement 2 un ergot avec une tige 212 surmontée d'une tête 214 et d'autre part, sur le cadre 101 correspondant, un support de fixation 107 portant latéralement une saillie 216 dans laquelle est réalisée une rainure 218 de profil adapté pour recevoir la tête 214 et sa tige 212. On peut par exemple prévoir, comme représenté sur la figure 14, que le support de fixation 107 est vissé sur le cadre 101 correspondant.

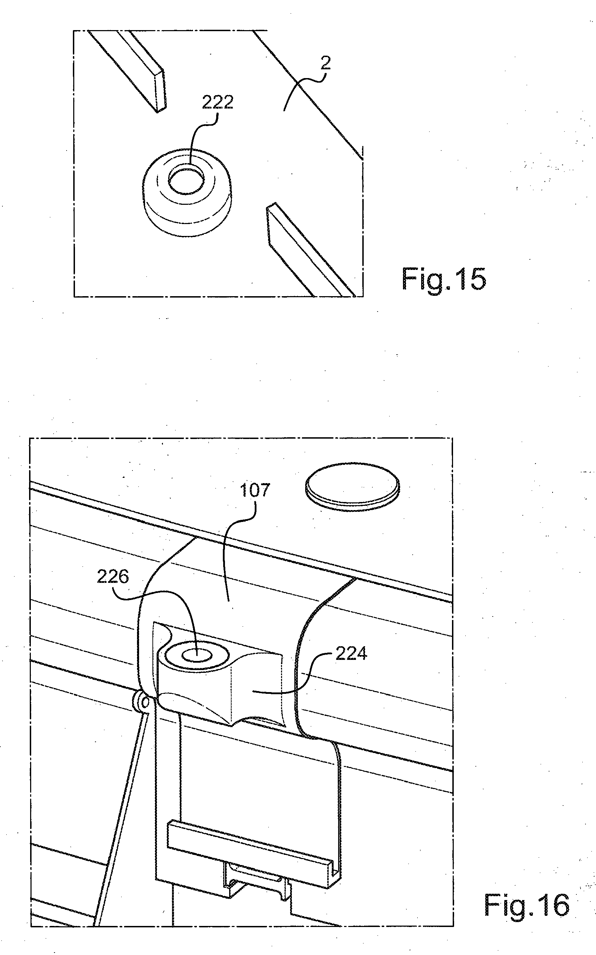

Les figures 15 et 16 montrent quant à elles des moyens de fixation utilisées par exemple pour la fixation de panneau de revêtement 2 aux points de fixation 220 (figure 12). Il est prévu ici de réaliser un vissage du panneau de revêtement sur le support de fixation. Ainsi, comme illustré sur la figure 15, le panneau de revêtement présente un trou renforcé 222 tandis que le support de fixation présente une saillie 224 présentant un logement taraudé 226.

Dans les variantes de réalisation décrites ici, il peut être envisagé, comme illustré sur la figure 9, qu'un ou plusieurs supports de fixation 107 soit utilisé également pour le supportage de câbles 115 électriques. L'homme du métier saura également adapter ces supports de fixation 107 pour qu'ils puissent recevoir en plus, ou à la place des câbles 115, un tuyau d'air 3 (pour des raisons d'encombrement, il est difficile a priori de prévoir plusieurs tuyaux d'air 103 sur un seul support de fixation 107. Toutefois, ceci n'est pas exclure).

Le montage d'un dispositif de revêtement intérieur 1 selon la présente invention peut être effectué par exemple comme indiqué ci-après. Le panneau de revêtement 2 du dispositif est par exemple tout d'abord équipé de tuyaux d'air 3 et/ou de câbles 115 électriques. Entre deux cadres 101, on vient alors disposer à chaque fois un matelas de peau qui peut être maintenu par exemple à l'aide de bandes à boucles et crochets plus connues sous la marque Velcro. Les cadres 101 sont eux aussi recouverts d'un matelas isolant appelé matelas de cadre. Ils sont maintenus sur les cadres 101 à l'aide par exemple des supports de fixation 107. La liaison entre les matelas de peau et les matelas de cadre peut être réalisée par exemple à l'aide de bandes à boucles et crochets. Si des systèmes (tuyaux d'air ou câbles électriques ou similaires) sont prévus d'être montés directement sur les supports de fixation 107, ils sont alors montés. Le dispositif de revêtement 1 est alors prêt à être monté sur les cadres 101 à l'aide des moyens de fixation prévus sur le panneau de revêtement 2 et les supports de fixation 107. Les divers raccordements de systèmes sont réalisés avant et/ou pendant et/ou après la mise en place du dispositif de revêtement 1.

L'invention peut faire l'objet de nombreuses variantes par rapport aux modes de réalisation illustrés, dès lors que ces variantes entrent dans le cadre délimité par les revendications.

Par exemple, les dimensions du panneau de revêtement peuvent correspondre à une tranche du fuselage (au lieu de deux tel qu'illustré). Dans ce cas, le dispositif de revêtement intérieur selon l'invention intègre de préférence un seul tuyau d'air.

Les moyens de fixation d'un dispositif de revêtement selon l'invention sur la structure d'un aéronef ont été décrits ci-dessus à titre d'exemples non-limitatifs. Tout autre support de fixation connu, ou adapté pour la présente invention, peut être envisagé avec des moyens de fixation complémentaires éventuels prévus sur le dispositif de revêtement, et plus particulièrement sur le panneau de revêtement.

## Revendications

1. Dispositif de revêtement intérieur d'une cabine d'aéronef, destiné à être fixé à une structure (101) d'un aéronef et à s'étendre le long d'une peau (102) de l'aéronef, ledit dispositif comprenant un panneau de revêtement (2) portant au moins un tuyau de circulation d'air (3), dit tuyau d'air (3), fixé à une face extérieure (6) du panneau de revêtement, chaque tuyau d'air présentant une extrémité (26), dite extrémité amont, munie d'un dispositif de raccordement (27), chaque tuyau d'air présentant une autre extrémité, dite extrémité aval, s'ouvrant sur une bouche de sortie d'air (24) traversant le panneau de revêtement (2),
**caractérisé en ce que** chaque tuyau d'air (3) étant pourvu d'une patte de fixation (12) qui s'engage dans un support (13), dit support de verrouillage axial, fixé à la face extérieure (6) du panneau de revêtement, ladite patte de fixation et ledit support de verrouillage axial étant adaptés pour coopérer de façon à interdire tout déplacement du tuyau d'air selon une direction axiale dudit tuyau relativement au panneau de revêtement.

2. Dispositif selon la revendication 1, **caractérisé en ce que** chaque bouche de sortie d'air est formée par une buse (24), et **en ce que** l'extrémité aval de chaque tuyau d'air est raccordée à la buse correspondante par un dispositif de raccordement (25).

3. Dispositif selon l'une des revendications 1 à 2, **caractérisé en ce que** l'extrémité amont (26) de chaque tuyau d'air s'étend en saillie d'un bord inférieur du panneau de revêtement.

4. Dispositif selon l'une des revendications 1 à 3, **caractérisé en ce que** la patte de fixation (12) présente une section en forme de C dans un plan transversal du tuyau d'air (3) et comprend une âme présentant deux excroissances (15) latérales opposées s'étendant selon la direction axiale dudit tuyau, le support de verrouillage axial (13) comprenant deux rainures (16) latérales en regard recevant lesdites excroissances.

5. Dispositif selon l'une des revendications 1 à 4, **caractérisé en ce que**, pour chaque tuyau d'air, au moins un autre support (11), dit support de maintien latéral, est fixé à la face extérieure (6) du panneau de revêtement, chaque support de maintien latéral comprenant une face semi-circulaire (23) de réception d'un tuyau d'air et un collier de serrage (18) entourant ledit tuyau d'air.

6. Dispositif selon l'une des revendications 1 à 5, **caractérisé en ce que** le panneau de revêtement porte au moins un support de câbles (201) et au moins un câble (115) électrique monté dans lesdits supports.

7. Aéronef **caractérisé en ce qu'**il comprend des dispositifs de revêtement intérieur selon l'une des revendications 1 à 6.

8. Aéronef selon la revendication 7, **caractérisé en ce que** ledit aéronef comporte des cadres (101) et une peau (102), **en ce que** des matelas de peau recouvrent la peau (102) entre deux cadres (101), **en ce que** des matelas de cadre recouvrent les cadres (101), et **en ce que** le dispositif de revêtement selon l'une des revendications 1 à 9 comporte des moyens de fixation permettant la fixation dudit dispositif sur des supports de fixation (107) fixés chacun sur un cadre (101) et maintenant, au moins localement, le matelas de cadre correspondant sur ledit cadre (101).

## Patentansprüche

1. Innenverkleidungsvorrichtung einer Kabine eines Luftfahrzeugs, die dazu bestimmt ist, an einer Struktur (101) eines Luftfahrzeugs befestigt zu werden und sich entlang einer Haut (102) des Luftfahrzeugs zu erstrecken, wobei die Vorrichtung ein Außenhaut-Paneel (2) umfasst, das mindestens einen Luftumwälzungsschlauch (3), einen sogenannten Luftschlauch (3), trägt, der an einer Außenfläche (6) des Außenhaut-Paneels befestigt ist, wobei jeder Luftschlauch ein Ende (26), ein sogenanntes stromaufwärtiges Ende, aufweist, das mit einer Verbindungsvorrichtung (27) versehen ist, wobei jeder Luftschlauch ein weiteres Ende, ein sogenanntes stromabwärtiges Ende, aufweist, das in einem Luftauslass (24) mündet, der durch das Außenhaut-Paneel (2) führt,
**dadurch gekennzeichnet, dass** jeder Luftschlauch (3) mit einer Befestigungslasche (12) versehen ist, die mit einer Stütze (13), einer sogenannten axialen Verriegelungsstütze, in Eingriff steht, die an der Außenfläche (6) des Außenhaut-Paneels befestigt ist, wobei die Befestigungslasche und die axiale Verriegelungsstütze dazu ausgeführt sind, derart zusammenzuwirken, dass jegliche Verschiebung des Luftschlauchs in einer axialen Richtung des Schlauchs bezüglich des Außenhaut-Paneels unterbunden wird.

2. Vorrichtung nach Anspruch 1, **dadurch gekennzeichnet, dass** jeder Luftauslass durch eine Düse (24) gebildet wird, und dass jedes stromabwärtige Ende jedes Luftschlauchs durch eine Verbindungsvorrichtung (25) mit der entsprechenden Düse verbunden ist.

3. Vorrichtung nach einem der Ansprüche 1-2, **dadurch gekennzeichnet, dass** sich das stromaufwärtige Ende (26) jedes Luftschlauchs von einem unteren Rand des Außenhaut-Paneels vorstehend erstreckt.

4. Vorrichtung nach einem der Ansprüche 1-3, **dadurch gekennzeichnet, dass** die Befestigungslasche (12) einen C-förmigen Querschnitt in einer Querebene des Luftschlauchs (3) aufweist und einen Steg umfasst, der zwei laterale Vorsprünge (15) aufweist, die sich gegenüber liegen und sich entlang der axialen Richtung des Schlauchs erstrecken, wobei die axiale Verriegelungsstütze (13) zwei gegenüberliegende laterale Nuten (16) zum Aufnehmen der Vorsprünge umfasst.

5. Vorrichtung nach einem der Ansprüche 1-4, **dadurch gekennzeichnet, dass** für jeden Luftschlauch mindestens eine weitere Stütze (11), eine sogenannte laterale Haltestütze, an der Außenfläche (6) des Außenhaut-Paneels befestigt ist, wobei jede laterale Haltestütze eine halbkreisförmige Fläche (23) zur Aufnahme eines Luftschlauchs und eine den Luftschlauch umgebende Klemmschelle (18) umfasst.

6. Vorrichtung nach einem der Ansprüche 1-5, **dadurch gekennzeichnet, dass** das Außenhaut-Paneel mindestens einen Kabelhalter (201) und mindestens ein elektrisches Kabel (115), das an den Haltern angebracht ist, trägt.

7. Luftfahrzeug, **dadurch gekennzeichnet, dass** es Innenverkleidungsvorrichtungen nach einem der Ansprüche 1-6 umfasst.

8. Luftfahrzeug nach Anspruch 7, **dadurch gekennzeichnet, dass** das Luftfahrzeug Rahmen (101) und eine Haut (102) umfasst, dass Hautmatten die Haut (102) zwischen zwei Rahmen (101) bedecken, dass Rahmenmatten die Rahmen (101) bedecken und dass die Verkleidungsvorrichtung nach einem der Ansprüche 1-9 Befestigungsmittel umfasst, die eine Befestigung der Vorrichtung an Befestigungsstützen (107), die jeweils an einem Rahmen (101) befestigt sind, gestatten und zumindest stellenweise die entsprechende Rahmenmatte an dem Rahmen (101) hält.

## Claims

1. Internal lining device for an aircraft cabin, said device being intended to be fixed to a structure (101) of an aircraft and to extend along a skin (102) of the aircraft, said device comprising a lining panel (2) bearing at least one air flow hose (3), known as an air hose (3), fixed to an outer face (6) of the lining panel, each air hose having an end (26), known as the upstream end, provided with a connection device (27), each air hose having another end, known as the downstream end, that opens out at an air outlet (24) passing through the lining panel (2),
**characterized in that** each air hose (3) is provided with a fixing tab (12) which is inserted into a support (13), known as an axial locking support, fixed to the outer face (6) of the lining panel, said fixing tab and said axial locking support being designed to cooperate so as to prevent any movement of the air hose in an axial direction of said hose relative to the lining panel.

2. Device according to claim 1, **characterized in that** each air outlet is formed by a nozzle (24), and **in that** the downstream end of each air hose is connected to the corresponding nozzle by a connection device (25).

3. Device according to either of claims 1 and 2, **characterized in that** the upstream end (26) of each air hose protrudes from a lower edge of the lining panel.

4. Device according to one of claims 1 to 3, **characterized in that** the fixing tab (12) has a C-shaped section in a transverse plane of the air hose (3) and comprises a core having two opposite lateral protuberances (15) extending in the axial direction of said hose, the axial locking support (13) comprising two facing lateral grooves (16) that receive said protuberances.

5. Device according to one of claims 1 to 4, **characterized in that**, for each air hose, at least one other support (11), known as the lateral holding support, is fixed to the outer face (6) of the lining panel, each lateral holding support comprising a semicircular face (23) for receiving an air hose and a clamping collar (18) surrounding said air hose.

6. Device according to one of claims 1 to 5, **characterized in that** the lining panel bears at least one cable support (201) and at least one electric cable (115) mounted in said supports.

7. Aircraft, **characterized in that** it comprises internal lining devices according to one of claims 1 to 6.

8. Aircraft according to claim 7, **characterized in that** said aircraft has frames (101) and a skin (102), **in that** field blankets cover the skin (102) between two frames (101), **in that** frame blankets cover the frames (101), **in that** the lining device according to one of claims 1 to 9 has fixing means for fixing said device to fixing supports (107) that are each fixed to a frame (101) and, at least locally, hold the corresponding frame blanket on said frame (101).
